# EUROPEAN PATENT APPLICATION

(11) **EP 3 996 181 A1**
(43) Date of publication of application: **11.05.2022**
(21) Application number: 21206797.9
(22) Date of filing: 05.11.2021
(51) Int. Cl.: H01M 10/0585, H01M 50/105, H01M 50/211, H01M 50/531

(54) **CELL ASSEMBLY METHOD, STORAGE UNIT AND RELATIVE VEHICULAR BATTERY PACK**

(30) Priority: 06.11.2020 IT 202000026593
(71) Applicant: FERRARI S.p.A., 41100 Modena (IT)
(72) Inventor: POGGIO, Luca, 41100 MODENA (IT)
(74) Representative: Maccagnan, Matteo

(57) **Abstract**

A method for assembling cells installable in a vehicular battery pack (10); the method including the steps of stacking a plurality of electrodes (3, 4) in such a way that the tabs (6) of each electrode with the same polarity are aligned with each other; arranging a first planar cell (2) and a second planar cell (2) in such a way that the tabs (6) having the same polarity are at least partially facing and at least partially superimposed in correspondence with an overlapping area (7) of each tab (6), distal with respect to the main body (8);
welding together, directly, at least one terminal tab (6) belonging to the first planar cell (2) and one terminal tab (6) belonging to the second planar cell (2) in correspondence with said overlapping area (7).

## Description

### CROSS-REFERENCE TO RELATED APPLICATIONS

This Patent Application claims priority from Italian Patent Application No. 102020000026593 filed on November 6, 2020.

### TECHNICAL FIELD

The present invention relates to the scope of energy storage systems in the automotive sector and in particular it relates to a cell assembly method, to an electrical energy storage unit and to a relative vehicular battery pack.

### PRIOR ART

Lithium batteries in relation to their high density increasingly allow the implementation of electrics in the automotive sector. Lithium polymers, in particular, currently represent, from a chemical point of view, the state of the art in the production of high-capacity batteries.

Solutions are known which provide for the interconnection in series and in parallel of different cells (generally, each of 3.7 V) to achieve the desired total voltage and energy density for a vehicular battery pack.

The battery modules usually available on the market for powering smartphones and tablets (and increasingly widespread also in the automotive sector), consist of planar pouch batteries, which have a very limited thickness compared to the other dimensions. Two very wide opposite faces (through which the heat is dissipated almost entirely) and four thin and elongated sides are identified, in which the positive and negative terminals of the cell are arranged on one or two opposite sides.

Generally, the aforesaid terminals are used to electrically connect the different cells with each other in series or in parallel. In particular, each cell consists of a plurality of stacked electrode plates with alternating polarity (positive and negative). Each of these electrode plates comprises a tab extending from the rest of the electrode plate and configured to be, by means of a first weld, electrically connected to the other tabs of the same cell extending from plates with the same polarity and, subsequently, by means of a second weld, so as to be connected to the terminal (positive or negative, respectively) of the cell, generally consisting of a metal plate which is thicker and more rigid with respect to the electrode tabs.

However, the aforesaid welds are generally carried out by means of laser devices (very slow for welding great thicknesses), or ultrasound devices (subject to heavy wear, in particular the sonotrode must be replaced often and the laser device adjusted at each replacement).

Furthermore, the battery packs obtained by means of the aforesaid production method are still particularly expensive and bulky.

### DESCRIPTION OF THE INVENTION

The object of the present invention, among others, is to provide a cell assembly method, an electrical energy storage unit and a relative vehicular battery pack which are at least partially free from the drawbacks described above and, at the same time, are of simple and cost-effective implementation.

According to the present invention, a cell assembly method, an electrical energy storage unit and a relative vehicular battery pack are provided as claimed in the appended claims.

The claims describe preferred embodiments of the present invention forming integral part of the present description.

### BRIEF DESCRIPTION OF THE DRAWINGS

The present invention will now be described with reference to the accompanying drawings, which illustrate several non-limiting example embodiments thereof; in particular:
- Figure 1 is a schematic cross-section view of a portion of an electrical energy storage unit comprising two cells electrically interconnected in series according to the prior art;
- Figure 2 is a schematic cross-section view of a portion of an electrical energy storage unit comprising two cells electrically interconnected in series according to the present invention;
- Figure 3 is a schematic and perspective view of a first embodiment of the present invention;
- Figure 4 is a schematic and perspective view of a second embodiment in accordance with the present invention; and
- Figure 5 is a perspective and schematic view of a vehicular battery pack comprising the storage units of Figure 3.

### PREFERRED EMBODIMENTS OF THE INVENTION

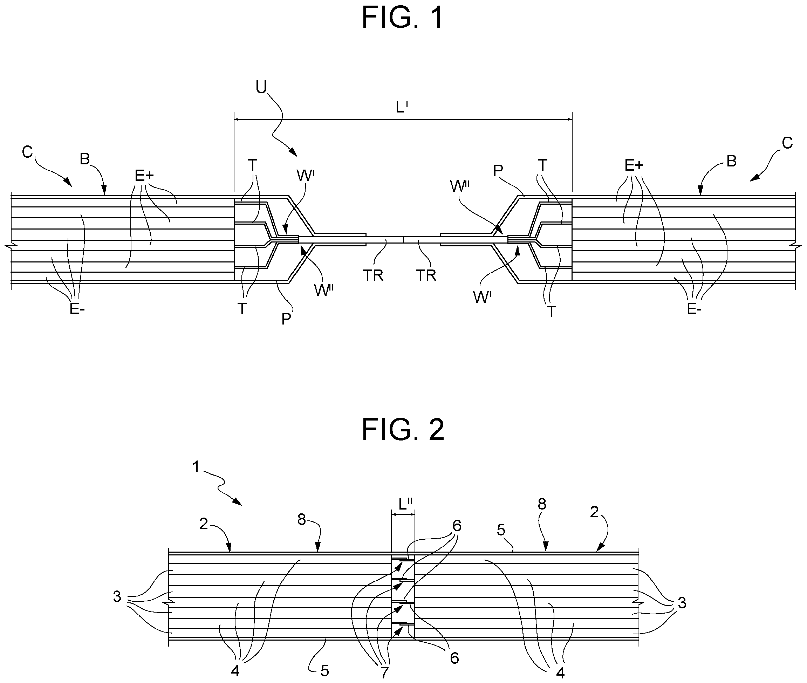

In Figure 1, U indicates a generic electrical energy storage unit belonging to the prior art and comprising at least two planar cells C, each closed inside a respective pouch P, each of which comprises in turn a plurality of positive E+ and negative E- electrode plates stacked alternate to each other and spaced by means of a separator layer (also of a known type and therefore not illustrated). Each electrode plate E+, E- comprises a respective electrode tab T (arranged, in this case, on opposite sides of the cell C, i.e. those illustrated in Figure 1 are all electrode tabs T having the same polarity, positive or negative), which extends from a main body B of the cell C (defined precisely by the stack of electrodes and separators).

In each of the cells C illustrated in Figure 1, the electrode tabs T are initially welded together by means of a weld W' forming a bundle of tabs.

Such bundle of tabs is then further welded by means of a welding W" to an electrical terminal TR of the cell, having a much greater thickness with respect to each tab T.

The cells C are then connected in series by contacting the respective terminals TR having a same polarity. As evident from Figure 1, the distance between the main bodies B of the two cells connected in series corresponds to a distance L', generally in the order of centimeters, in particular greater than 3 cm.

In Figure 2, reference numeral 1 indicates as a whole an electrical energy storage unit that can be installed in a vehicular battery pack (for the mobility of the vehicle) in accordance with a first aspect of the present invention.

The electrical energy storage unit 1 comprises at least two planar cells C connected to each other in series.

Each cell C comprises a plurality of electrodes 3 and 4 (for example, negative and positive, respectively). In turn, each electrode comprises a respective terminal tab 6, which extends protruding from a main body 8 of the cell 2.

Advantageously but not necessarily, the terminal tabs 6 are made integrally with, or made from, the positive and/or negative electrodes. In particular, each terminal tab 6 is made integrally with (made from) a current collector (usually coated with active materials) of the positive or negative electrode. More particularly, the current collector and the terminal tab extending therefrom are made of copper for the anode and of aluminum or zinc for the cathode.

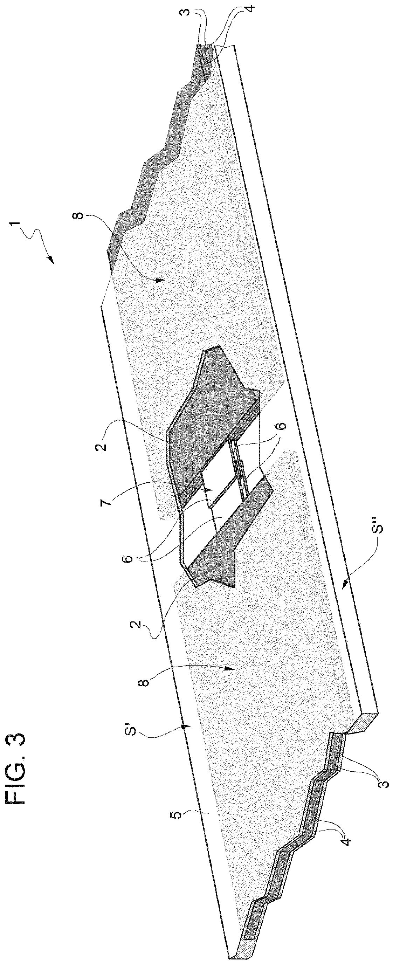

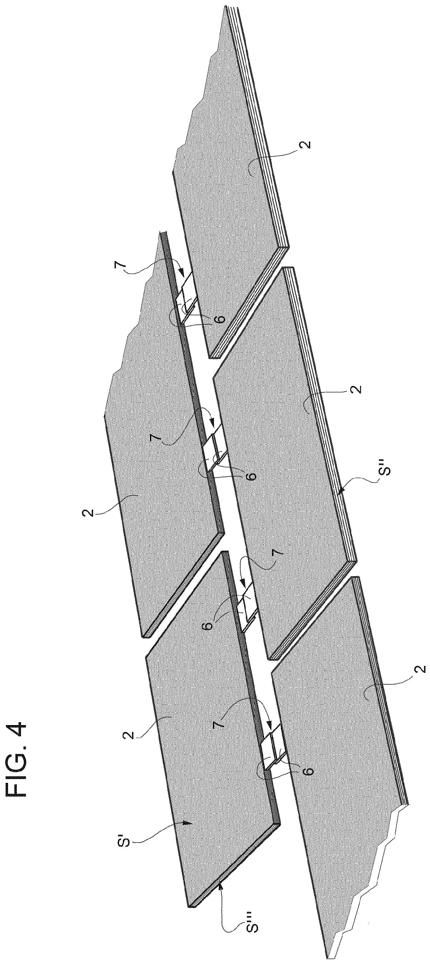

In particular, each planar cell 2 has a parallelepiped shape with a very limited thickness with respect to the other dimensions. Six faces corresponding two-by-two are thus identified, of which, as illustrated in the non-limiting embodiments of Figures 3 and 4, two very wide planar faces S', two thin and elongated front faces S" and two lateral thin and elongated faces"' (less with respect to the front faces S"').

Advantageously, the electrodes 3 and 4 are stacked together in such a way that the tabs 6 with the same polarity (positive or negative - and therefore of the same material) are aligned with each other (vertically). In particular, the planar cells 2 are arranged in such a way that the tabs 6 having the same polarity (positive or negative - and thus of the same material) of each planar cell 2 are at least partially facing each other. In other words, the faces S"' (as in the non-limiting embodiment of Figure 3) or the faces S" (as in the non-limiting embodiment of Figure 4) of two adjacent cells are facing each other (and parallel).

Advantageously, and as illustrated in the non-limiting embodiments of Figures 2 to 5, the planar cells 2 are arranged in such a way that the tabs 6 having the same polarity of two adjacent cells, connected in series, are at least partially superimposed in correspondence with an overlapping area 7. More precisely, the overlapping area 7 between the tabs 6 of two adjacent cells 2 is, with respect to each cell 2, in a distal position of each tab 6, with respect to the main body 8 of the respective cell 2.

In particular, in correspondence with said overlapping area 7, at least one terminal tab 6, belonging to a planar cell 2, and a terminal tab 6, belonging to the adjacent planar cell 2, are directly welded together, in particular preferably by means of a heat welding, so as to connect the two planar cells 2 in series. The tabs 6 superimposed in the area 7 clearly having the same polarity.

In some non-limiting cases, the welding is a laser welding, in particular linear (along a direction parallel to the face S", S"' from which the terminal tabs 6 to be welded project) or a spot welding.

Advantageously but not necessarily, as illustrated in the non-limiting embodiment of Figure 2, the distance between the main bodies 8 of the two cells 2 connected in series corresponds to a distance L", less than the distance L', preferably in the order of millimeters, in particular less than 25 mm, more precisely less than 10 mm.

Preferably, as illustrated in the non-limiting embodiments of Figures 2 and 3, in the overlapping area (7), at least one terminal tab 6 of a cell 2 is interposed between two terminal tabs 6 of the other cell 2 and/or vice versa.

According to some non-limiting embodiments, two or more (for example three or four) consecutive aligned tabs having the same polarity and belonging to a planar cell 2 are welded together before being welded with the tabs 6 having the same polarity as the adjacent planar cell 2.

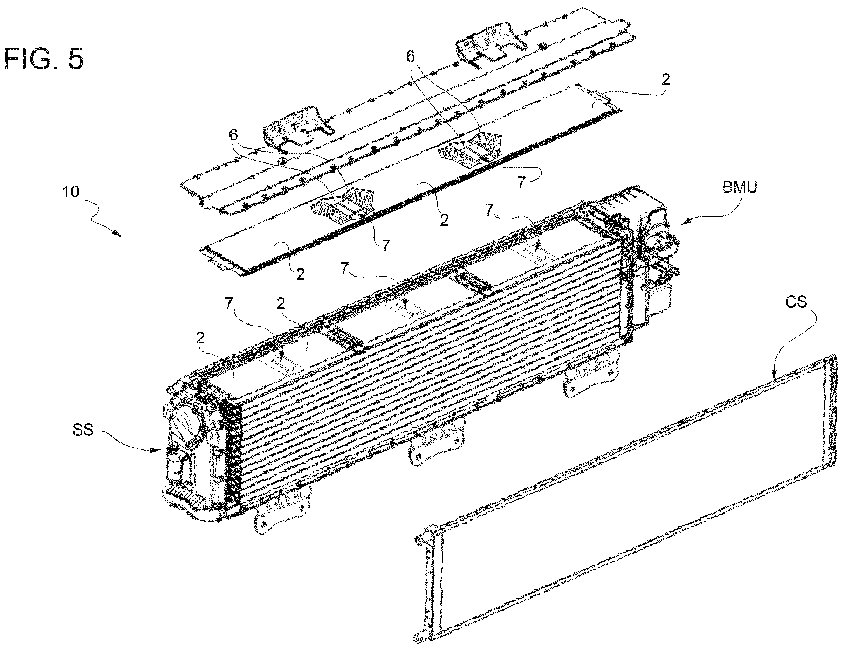

According to the non-limiting embodiment of Figures 3 and 5, the terminal tabs 6 having different (opposite) polarities of the same planar cell 2 protrude from opposite sides of the planar cell 2, in particular from the faces S"' of each cell. In this case, the planar cells 2 connected in series lie on a same plane and on a same longitudinal axis of symmetry.

In the non-limiting embodiment of Figure 4, the terminal tabs 6 having different (opposite) polarities of a same planar cell 2 protrude from a same side of the planar cell 2, in particular from one of the faces S" of each cell 2. In these cases, the planar cells 2 connected in series lie on the same plane, but not on a same longitudinal axis of symmetry. In particular, they are arranged offset from each other along both directions belonging to the plane on which they lie. More specifically, the cells 2 are equal to each other (in length) and, along a longitudinal direction of the storage unit 1, are offset by half their length. In this way, it is possible to organize the unit 1 with the cells arranged as a coil as illustrated in Figure 4. In this way, moreover, all the contacts in series are consecutive on the same straight line and it is thus possible to simplify the structure of a safety structure which continuously detects the voltage of each cell.

Advantageously but not necessarily, the storage unit 1 comprises a single external pouch 5, inside which at least one pair of cells 2 are housed.

According to a further aspect of the present invention, a vehicular battery pack 10 is provided comprising at least one unit 1 according to what previously described.

Advantageously but not necessarily, the battery pack 10 comprises a plurality of levels (layers) of units 1 as illustrated in the non-limiting embodiment of Figure 5.

In some non-limiting cases, such as that illustrated in the upper layer of Figure 5, the unit 1 occupies an entire level of the battery pack and also comprises more than two cells connected in series as described. In this way, the advantages of the present invention are maximum.

In other non-limiting cases, such as that illustrated in the second layer (starting from the top), a level comprises a plurality of units 1 interconnected in series, according to known techniques. In this way, the advantages of the present invention are partial, but in any case appreciable.

Advantageously but not necessarily, the battery pack 10 also comprises a safety system SS and a Battery Management Unit (BMU), in particular arranged, together, on opposite sides of the battery pack 10.

Advantageously but not necessarily, the battery pack 10 also comprises a refrigeration system CS, in particular arranged on a wall of the battery pack 10 perpendicular to the levels of the energy storage unit 1 (and on a wall other than those occupied by the system SS and by the BMU).

According to a further aspect of the present invention, a method is provided for assemblying planar cells 2 which can be installed in a vehicular battery pack. In particular, the method is aimed at manufacturing the electrical energy storage units 1.

Advantageously, the method comprises a step of stacking, with alternating polarity so as to generate the planar cell 2, a plurality of at least three electrodes 3 and 4, each of which comprises a respective terminal tab 6 extending from a main body 8 of the cell 2. In particular, the electrodes 3 and 4 are stacked in such a way that the tabs 6 having the same polarity are aligned with each other (vertically).

Advantageously but not necessarily, the method also comprises a step of arranging at least two planar cells 2 in such a way that tabs 6 having the same polarity of each of the two planar cells 2 are at least partially facing and at least partially superimposed in correspondence with an overlapping area 7 of each tab 6, distal with respect to the main body 8. In other words, the tabs 6 having positive (or negative) polarity of a cell 2 are at least partially superimposed on tabs 6 having negative polarity (or positive polarity, depending on the type of connection in series or in parallel to be made) of the other cell 2.

In particular, the method provides for the further step of welding together, directly, at least one terminal tab 6 belonging to a planar cell 2 and a terminal tab 6 belonging to the adjacent planar cell 2 to which it is connected in series. In detail, the welding is carried out in correspondence with said overlapping area 7.

Preferably, the terminal tabs 6 having the same polarity as a cell 2 and respective terminal tabs 6 having the same polarity of the other cell 2 are welded together so that at least one terminal tab 6 of the first cell 2 is interposed between two terminal tabs 6 of the second cell 2 and/or vice versa.

Advantageously but not necessarily, the method further comprises a step of pre-welding together one or more terminal tabs 6 having the same polarity and belonging to the same planar cell 6.

In some non-limiting cases, the terminal tabs 6 having the same polarity of a planar cell 2 are welded individually or in pairs with respective terminal tabs 6 having the same polarity of the adjacent cell 2 connected in series.

Advantageously but not necessarily, the method comprises the further step of enveloping at least the first cell and the second cell inside a same pouch 5.

In some non-limiting cases, the welding step is carried out by means of a welding device provided with a plurality of prongs, as many as the welds between tabs of different cells to be carried out.

In other non-limiting cases, the welding step is carried out by means of a laser welding device.

Advantageously but not necessarily, therefore, the electrical energy storage unit 1 does not comprise intermediate metal terminals (for example the terminal TR) between the tabs 6 of two adjacent cells 2 connected in series.

In particular, therefore, in the assembly method no intermediate metal terminals are used between the tabs 6 of two adjacent cells 2 connected in series.

Although the invention described above makes particular reference to a very precise example embodiment, it is not to be considered limited to such example embodiment, since all the variants, modifications or simplifications covered by the appended claims, such as for example a different type of arrangement, a different type of materials, a different geometric configuration, etc., fall within its scope.

The method, the unit and the apparatus described above have numerous advantages.

Firstly, the present invention allows optimizing the use of the space inside a battery pack. In particular, as highlighted by the difference between the length L' and the length L", the empty space generally present between two cells connected in series can consequently be filled with active material or can be used to reduce the general volume of the battery pack (given the presence of hundreds of cells, the optimized use of such space produces a considerable effect).

Furthermore, the present invention allows preventing the slowness of the double laser welding and the high installation and maintenance costs of the double ultrasonic welding, allowing saving time and waste.

A further advantage of the present invention resides in the fact that the present structure allows reducing or simplifying the number of controls necessary inside the battery pack.

Finally, the method, the unit and the battery pack described above allow limiting the likelihood of waste during the production of a battery pack since the general number of welds to be carried out in the production of a battery pack is almost halved, and therefore also the relative error coefficient.

### LIST OF THE REFERENCE NUMERALS OF THE FIGURES

- 1: storage unit
- 2: cell
- 3: electrode
- 4: electrode
- 5: pouch
- 6: tab
- 7: weld
- 8: cell body
- 10: battery pack
- U: storage unit
- C: cell
- E+: electrode
- E-: electrode
- P: pouch
- T: tab
- W': weld
- W": weld
- L': cell-to-cell distance
- L": cell-to-cell distance
- B: cell body
- TR: terminal
- S': surface
- S": surface
- S"': surface
- BMU: battery management unit
- SS: safety
- CS: cooling system

## Claims

1. A method for assembling cells installable in a vehicle battery pack (10); the method including the steps of:
stacking, with alternating polarity so as to generate a planar cell (2), a plurality of at least three electrodes (3, 4), each of which comprises a respective terminal tab (6) extending from a main body (8) of said cell (2); the electrodes (3, 4) being stacked in such a way that the tabs (6) with the same polarity are aligned with each other; wherein the terminal tabs (6) are made integrally with, or made from, the electrodes (3, 4);
arranging a first planar cell (2) and a second planar cell (2) in such a way that tabs (6) having the same polarity of the first planar cell (2) and of the second planar cell (2) are, each other, at least partially facing and at least partially superimposed in correspondence with an overlapping area (7) of each tab (6), distal with respect to the main body (8);
welding together, directly, at least one terminal tab (6) belonging to the first planar cell (2) and one terminal tab (6) belonging to the second planar cell (2) in correspondence with said overlapping area (7).
wherein the terminal tabs (6) having the same polarity as the first cell (2) and respective terminal tabs (6) having the same polarity as the second cell (2) are welded together so that at least one terminal tab (6) of the first cell (2) is interposed between two terminal tabs (6) of the second cell (2) and/or vice versa.

2. The method according to claim 1, and comprising a step of pre-welding together more terminal tabs (6) having the same polarity and belonging to the same first or second cell (2).

3. The method according to claim 1, wherein the terminal tabs (6) of the first (2) cell and having the same polarity are welded individually or in pairs with respective terminal tabs (6) having the same polarity as the second cell (2).

4. The method according to any one of the preceding claims, and comprising the further step of enveloping at least the first cell (2) and the second cell (2) inside the same pouch (5) or casing.

5. The method according to any one of the preceding claims, wherein the welding step is carried out by means of a welding device provided with a plurality of prongs, as many as the welds between tabs (6) of different cells to be carried out.

6. Method according to any one of the preceding claims, wherein intermediate metal terminals are not used between the tabs (6) belonging to the first planar cell (2) and the tabs (6) belonging to the second planar cell (2).

7. An electric energy storage unit (1) installable in a vehicle battery pack (10); the unit (1) comprising at least a first planar cell (2) and a second planar cell (2) each comprising a plurality of at least three electrodes (3, 4), each of which in turn comprises a respective terminal tab (6) extending from a main body (8) of the respective cell (2); the electrodes (3, 4) being stacked in such a way that the tabs (6) with the same polarity are aligned with each other; wherein the terminal tabs (6) are made integrally with, or made from, the electrodes (3, 4); wherein the first planar cell (2) and the second planar cell (2) are arranged so that the tabs (6) having the same polarity of the first planar cell (2) and of the second planar cell (2) at least partially face each other;
the storage unit (1) being **characterized in that** the first planar cell (2) and the second planar cell (2) are arranged so that the tabs (6) having the same polarity of the first planar cell (2) and of the second planar cell (2) are at least partially superimposed in correspondence with an overlapping area (7) of each tab (6), distal with respect to the main body (8); wherein, in correspondence with said overlapping area (7), at least one terminal tab (6) belonging to the first planar cell (2) and one terminal tab (6) belonging to the second planar cell (2) are directly welded together;
wherein, in the overlapping area (7), at least one terminal tab (6) of the first cell (2) is interposed between two terminal tabs (6) of the second cell (2) and/or vice versa.

8. The unit (1) according to claim 7, wherein adjacent tabs (6) having the same polarity and belonging to the first planar cell (2) are welded together before being welded with the tabs (6) having the same polarity as the second planar cell (2).

9. The unit (1) according to any one of claims 7 or 8, wherein the terminal tabs (6) having different polarity protrude from opposite sides of the respective planar cell (2); wherein the first planar cell (2) and the second planar cell (2) lie on the same plane and on the same longitudinal axis of symmetry.

10. The unit (1) according to any one of claims 7 or 8, wherein the terminal tabs (6) having different polarity protrude from the same side of the respective planar cell (2); wherein the first planar cell (2) and the second planar cell (2) lie on the same plane, but not on the same longitudinal axis of symmetry.

11. The unit (1) according to claim 10, wherein the cells are arranged offset from each other along both directions belonging to the plane on which they lie.

12. The unit (1) according to claim 11, wherein the cells are equal to each other in length and, along a longitudinal direction of the storage unit (1), are offset by half their length.

13. A vehicular battery pack (10) comprising at least one unit (1) according to any one of claims 7 to 12.
